# EUROPEAN PATENT SPECIFICATION

(11) **EP 0 670 009 B1**
(45) Date of publication and mention of the grant of the patent: **18.06.1997**
(21) Application number: 91919230.2
(22) Date of filing: 03.10.1991
(51) Int. Cl.: F03D 11/00

(54) **AN IMPROVEMENT IN WIND-POWER PLANTS**
WINDKRAFTANLAGEN
AMELIORATION APPORTEE AUX CENTRALES EOLIENNES

(30) Priority: 04.10.1990 SE 9003166
(43) Date of publication of application: 06.09.1995
(73) Proprietor: SVENNING, Sven, S-510 13 Björketorp (SE)
(72) Inventor: SVENNING, Sven, S-510 13 Björketorp (SE)
(74) Representative: Franzén, Lars Hjalmar
(86) International application number: SE9100665
(87) International publication number: WO9206295

(56) References cited:
- US-A- 4 311 434

## Description

The subject invention concerns wind-power plant of the kind having an engine house. Such a plant is known from US-A-4 311 434.

When service jobs are to be performed in the engine house or in areas close to the turbine hub, considerable space is required, both to perform the work operations proper and to temporarily store machine parts and tools. This space requirement causes considerable problems in the case of engine houses having an optimally reduced size for which the demands that the engine-house surfaces emit a minimum amount of sound and that the costs be low, are quite considerable. Hitherto, only the top or roof sections of the hood have been constructed so as to allow them to be opened, and although this arrangement provides the workmen with sufficient headroom it does not satisfy the need for sufficient floor space in the case of compact cost-effective engine houses. Large-size engine houses furthermore are an obstruction in the carrying out of service jobs on the turbine-blade parts that are positioned close to the hub.

The purpose of the invention is to suggest an improvement by means of which the very hood of the engine house may serve as a floor surface including protective railing.

This purpose has been achieved in accordance with the invention in that the engine house is fitted with a hood at least one section of which is foldable in an outwards and downwards direction in such a manner that at least a part of the hood section assumes a horizontal position. End-position means, such as a protective railing arranged to be automatically extended from the end walls of the hood, maintain the floor area in the horizontal position. The hood section includes an outer portion which is bent upwards and which forms the protective railing when the hood section assumes its outer position, and the hood ceiling when the hood section is closed. When the hod sections are heavy, actuating means are required to perform folding operations. The actuating means may, for instance, be in the form of lifting jacks or winches arranged to maintain the hood section in the desired position when they assume their end positions. A vital safety lock is formed by a hinge connection by means of which the hood section is hingedly attached to the engine support floor, in that said hinge connection is fitted with abutment means restricting the extent of its angular movements.

The invention will be described in closer detail in the following with reference to the accompanying drawings, wherein
Fig. 1 illustrates a engine-house hood from which the nearby end wall has been removed to illustrate the minimum dimension requirement of the hood in closed position,
Figs. 2 and 5 illustrate the hood in the open, outwardly folded position and show the protective railing in extended position as well as the actuating means,
Fig. 3 is a lateral view of the hood with the nearby end wall having been removed therefrom, and
Fig. 4 illustrates a hinged connection including a movement-limiting abutment means.

In the drawings, numeral reference 1 designates two engine hood sections which are arranged to be opened, numeral reference 4 designates the hinge connection by means of which the hood sections are articulated to the engine support floor 3, and reference numerals 2 and 2' designate the respective hood end walls which are integrally attached to the support floor 3.

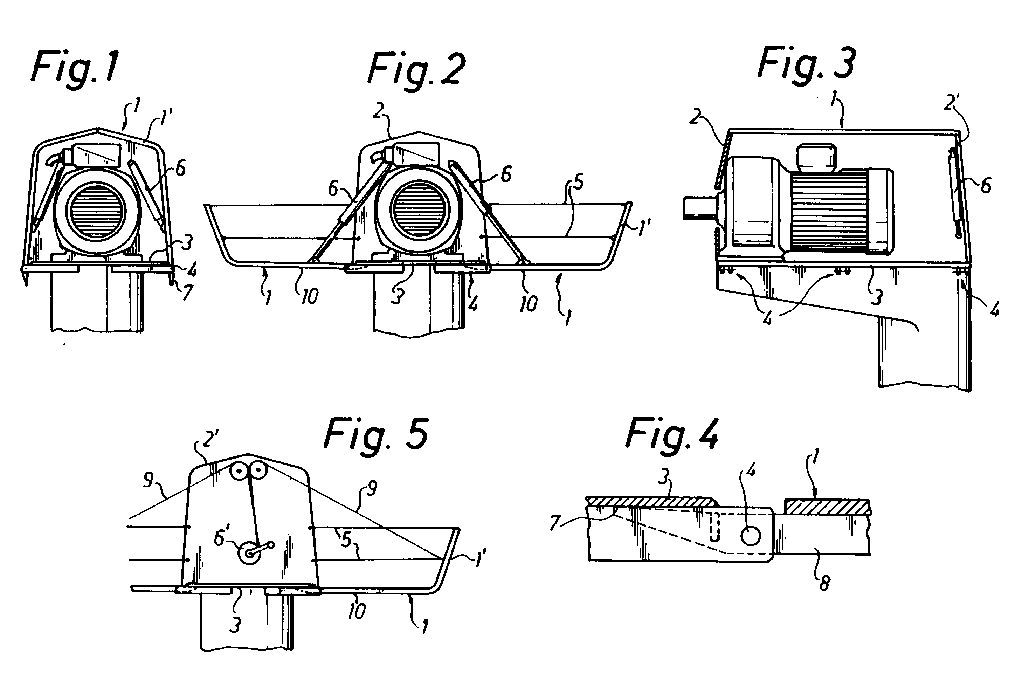

Actuating means, in accordance with Figs. 1 and 2 in the shape of actuating lifting jacks 6, are connected to their respective hood section 1 and end wall 2.

An outer portion 1' of the hood section 1, which portion is bent heavily upwards, also serves as a protective railing whereas wires 5 serve the same purpose at the end walls of the hood.

A wall frame element 8, illustrated in Fig. 4, extends beyond the hinge connection 4 up to a movement-restriction abutment means 7 in abutment against the floor 3.

In accordance with Fig. 5, the lifting jacks 6 are replaced by winches 6' acting on wires 9 to raise and lower the associated hood section 1.

Consequently, each hood section 1 may be folded outwards in such a manner that at least one portion 10 thereof assumes a horizontal position, in which position it forms a floor, providing the workmen with adequate and safe working space for service jobs while at the same time the floor may be used for temporary storage of machine parts and tools.

## Claims

1. Wind-power plant having an engine house, **characterized** in that the engine house is fitted with a hood at least one section (1) of which is foldable in an outwards and downwards direction in such a manner that at least a part (10) of the hood section (1) assumes a horizontal position.

2. Wind-power plant as claimed in claim 1, **characterized** in that the hood section (1) is hingedly suspended from an engine support floor (3) by means of a hinge connection (4) and it is arranged to be lowered into abutment against an abutment means (7).

3. Wind-power plant as claimed in claim 1 or 2, **characterized** in that the hood section (1) is formed with an upwardly bent portion (13) serving as a protection means.

4. Wind-power plant as claimed in any one of the preceding claims, **characterized** in that a protective railing (5) is tensioned by the weight of the hood section (1), thus maintaining the hood section in the outwards-folded position thereof.

5. Wind-power plant as claimed in any one of the preceding claims, **characterized** in that actuating means (6, 6') for raising and lowering the associated hood section (1) are formed with integral end-position limiting means arranged to maintain the associated hood section (1) in the desired end position thereof.

## Patentansprüche

1. Windkraftanlage mit einem Maschinengehäuse dadurch gekennzeichnet, daß das Maschinengehäuse eine Haube mit wenigstens einem Abschnitt (1) aufweist, der nach außen und unten klappbar ist, so daß wenigstens ein Teil (10) des Haubenabschnittes (1) eine horizontale Position einnimmt.

2. Windkraftanlage nach Anspruch 1, dadurch gekennzeichnet, daß der Haubenabschnitt (1) mittels einer Gelenkverbindung (4) an dem Maschinentragboden (3) gelenkig aufgehängt und so angeordnet ist, daß er bis zur Anlage mit Anschlagmitteln (7) absenkbar ist.

3. Windkraftanlage nach Anspruch 1 oder 2, dadurch gekennzeichnet, daß der Haubenabschnitt (1) mit einem nach oben gebogenen Bereich (1') als Schutzvorrichtung ausgebildet ist.

4. Windkraftanlage nach einem der Ansprüche 1 bis 3, dadurch gekennzeichnet, daß Schutzgeländer (5) von dem Gewicht des Haubenabschnittes (1) gespannt wird, so daß der Haubenabschnitt in seiner nach außen geklappten Position gehalten ist.

5. Windkraftanlage nach einem der Ansprüche 1 bis 4, dadurch gekennzeichnet, daß Betätigungsvorrichtungen (6, 6') zum Anheben und Absenken des angeschlossenen Haubenabschnittes (1) mit integrierten Endpositionierungsmitteln versehen sind, um den angeschlossenen Haubenabschnitt (1) in der gewünschten Endposition zu halten.

## Revendications

1. Centrale éolienne comprenant un carter, caractérisée en ce que le carter est équipé d'un capot dont au moins une section (1) peut être pliée vers l'extérieur et vers le bas de façon qu'au moins une partie (10) de la section (1) de capot prenne une position horizontale.

2. Centrale éolienne selon la revendication 1, caractérisée en ce que la section (1) de capot est montée articulée à pivotement à un plancher (3) supportant le moteur au moyen d'une articulation à charnière (4) et est prévue pour être abaissée jusqu'à butée par un moyen de butée (7).

3. Centrale éolienne selon l'une quelconque des revendications 1 ou 2, caractérisée en ce que la section de capot (1) comporte une portion (1') incurvée vers le haut servant de moyen de protection.

4. Centrale éolienne selon l'une quelconque des revendications précédentes, caractérisée en ce qu'un garde-corps filaire (5) est tendu par le poids de la section (1) de capot, maintenant ainsi la section de capot dans sa position dépliée vers l'extérieur.

5. Centrale éolienne selon l'une quelconque des revendications précédentes, caractérisée en ce que des moyens d'actionnement (6,6') associés à la section de capot (1) pour la lever et l'abaisser sont constitués d'une seule pièce avec des moyens de limitation en position finale prévus pour maintenir la section (1) de capot qui leur est associée dans sa position finale désirée.
